# EUROPÄISCHE PATENTSCHRIFT

(11) **EP 3 120 128 B1**
(45) Veröffentlichungstag und Bekanntmachung des Hinweises auf die Patenterteilung: **15.08.2018**
(21) Anmeldenummer: 15712821.6
(22) Anmeldetag: 12.03.2015
(51) Int. Cl.: G01M 3/32

(54) **EVAKUIERBARE FLEXIBLE LECKAGEPRÜFKAMMER**
EVACUABLE FELXIBLE LEAK DETECTION CHAMBER
CHAMBRE FLEXIBLE ET ÉVACUABLE POUR LE TEST DE FUITE

(30) Priorität: 18.03.2014 DE 102014205027
(43) Veröffentlichungstag der Anmeldung: 25.01.2017
(73) Patentinhaber: Inficon GmbH, 50968 Köln (DE)
(72) Erfinder: VAN TRIEST, Hendrik, 50827 Köln (DE); DECKER, Silvio, Köln 50999 (DE)
(74) Vertreter: dompatent von Kreisler Selting Werner - Partnerschaft von Patent- und Rechtsanwälten mbB
(86) Internationale Anmeldenummer: PCT/EP2015/055181
(87) Internationale Veröffentlichungsnummer: WO 2015/140042

(56) Entgegenhaltungen:
- EP-A1- 0 741 288
- DE-A1- 19 642 099
- GB-A- 840 294

## Beschreibung

Die Erfindung betrifft eine evakuierbare flexible Prüfkammer zur Leckprüfung eines Prüflings.

Derartige Prüfkammern sind zum Beispiel Folienkammern, die Wände aus flexiblen Folien aufweisen. Eine solche Prüfkammer ist in EP 0 741 288 A1 beschrieben. Bei dem Prüfling kann es sich beispielsweise um eine Lebensmittelverpackung handeln, die auf Dichtigkeit zu prüfen ist. Der Prüfling wird in die geöffnete Prüfkammer gelegt. Anschließend wird die Prüfkammer geschlossen und evakuiert, wobei sich die flexiblen Wände (Folienwände) an den Prüfling anschmiegen. Unter dem Begriff "Vakuum" wird vorliegend kein absolutes Vakuum verstanden, sondern allgemein ein geringerer Druck als in der die Prüfkammer umgebenden Atmosphäre. Die flexiblen Prüfkammerwände schmiegen sich an den Prüfling an, sobald der Druck innerhalb der Prüfkammer geringer ist als in der die Prüfkammer umgebenden Atmosphäre. Demnach wird unter dem Begriff "evakuieren" auch das Herstellen eines Unterdrucks in der Prüfkammer verstanden und nicht notwendigerweise das Herstellen eines absoluten Vakuums.

Beim Schließen flexibler Prüfkammern besteht eine Schwierigkeit darin, dass aufgrund der Elastizität oder Flexibilität des flexiblen Wandmaterials eine Gasmenge in der Prüfkammer eingeschlossen wird. Je schneller die Kammer geschlossen wird, desto größer ist das eingeschlossene Gasvolumen, weil sich das flexible Wandmaterial aufgrund des Luftwiderstandes wölbt und beim Schließen ein zusätzliches Gasvolumen einfängt. Die Dauer der Evakuierung der Prüfkammer wird dadurch erhöht. Der Geschwindigkeitsgewinn bei einem schnellen Schließen der Kammer führt zu einem entsprechenden Geschwindigkeitsverlust bei deren Evakuierung, weil das eingefangene Gasvolumen ebenfalls evakuiert werden muss.

EP 0 741 288 A1, auf die sich der Oberbegriff von Anspruch 1 bezieht, beschreibt eine evakuierbare Leckageprüfkammer mit flexiblen Wänden, die mit einem Gas befüllt sind.

GB 840294 A beschreibt eine Leckageprüfkammer mit mehrlagigen Wänden.

DE 196 42 099 A1 beschreibt eine Folienprüfkammer zur Dichtheitsprüfung von Verpackungen.

Der Erfindung liegt die Aufgabe zugrunde, eine verbesserte Prüfkammer zur Leckprüfung bereitzustellen. Die erfindungsgemäße Prüfkammer ist definiert durch die Merkmale von Anspruch 1.

Das erfindungsgemäße Verfahren ist definiert durch die Merkmale von Anspruch 5.

Die das Prüfkammervolumen im geschlossenen Zustand umgebende Wand der erfindungsgemäßen Prüfkammer ist zumindest in einem Bereich aus zwei Lagen Wandmaterial gebildet. Die beiden Lagen bilden dabei einen doppellagigen Wandbereich, das heißt eine Doppelwand. Zumindest die dem Prüfkammervolumen und dem darin enthaltenen Prüfling zugewandte Lage ist aus einem flexiblen Material, d.h. einem Folienmaterial, gebildet. In dem von den beiden Lagen umschlossenen Zwischenvolumen ist erfindungsgemäß gegenüber der die Prüfkammer umgebenden Atmosphäre ein Überdruck herstellbar oder bereits vorhanden. Der Überdruck liegt vorzugsweise im Bereich von circa 100 mbar gegenüber der umgebenden Atmosphäre. Der Überdruck liegt in einem Bereich von 80 bis 120 mbar gegenüber der umgebenden Atmosphäre. In dem Zwischenvolumen zwischen den beiden Wandlagen können ein Gas, eine Flüssigkeit, ein Schaum oder ein Gel vorhanden sein. Durch den Überdruck ist die dem Prüfkammervolumen zugewandte Lage aus flexiblem Material im geöffneten Zustand der Kammer konvex in Richtung auf den Prüfling gewölbt.

Beim Schließen der Prüfkammer wirkt der Überdruck zwischen den beiden Lagen dem Luftwiderstand entgegen und die flexible Lage fängt kein zusätzliches Gasvolumen ein. Bei einer konvexen Wölbung in Richtung auf den Prüfling wird die flexible Lage gegen den Prüfling gedrückt und von diesem verformt. Das nach dem Schließen der Prüfkammer zu evakuierende Prüfkammervolumen ist dadurch reduziert.

Von besonderer Bedeutung ist, dass zumindest die dem Prüfling und dem Prüfkammervolumen zugewandte Lage aus flexiblem Material besteht. Die zweite, von dem Prüfkammervolumen abgewandte Lage ist starr. Die Wand besteht aus zwei aufeinander passenden Teilwänden. Die Randbereiche der Wand können von einem starren Rahmen gehalten werden. Die aufeinander zu klappenden Wandbereiche können durch ein Scharnier geführt werden oder miteinander verbunden sein.

Nach Einlegen des Prüflings in die Prüfkammer und vor dem Schließen der Prüfkammer sollte in dem Zwischenvolumen zwischen den beiden Lagen ein Überdruck im Bereich von ungefähr 100 mbar herrschen oder hergestellt werden.

Hierzu kann das Zwischenvolumen mit einer Pumpe verbunden sein, die den Überdruck herstellt. Des Weiteren ist ein Überdruckventil zur Vermeidung von Drücken von mehr als zum Beispiel circa 120 mbar zwischen den beiden Lagen denkbar.

Zwischen dem Prüfling und der Prüfkammerwand sollte ein gasleitendes Material, zum Beispiel eine gasleitende Matte aus einem Vlies, eingebracht werden, welches einen Gasfluss zwischen Prüfling und Wand ermöglicht. Dabei kann sich das gasleitende Material entlang der gesamten Innenseite der Prüfkammerwand erstrecken.

Ein starrer Rahmen kann die flexible Wand eingespannt halten. Dabei ist es vorteilhaft, wenn zwei flexible Kammerwände, die jeweils in einen zum Beispiel kreisrunden Ring-Rahmen eingespannt sind, aufeinander geklappt werden. Zwischen den beiden Rahmen sollte eine Gasdichtung vorhanden sein. Ein Spannelement kann die Rahmen gegeneinander pressen. In zumindest einem Bereich kann ein Scharnier zwischen den beiden Rahmen vorgesehen sein.

Das Zwischenvolumen zwischen den beiden Lagen kann vorteilhafterweise mit einem Drucksensor zur Messung des Drucks zwischen den beiden Lagen versehen sein. Anhand des gemessenen Drucks kann überwacht werden, ob sich der Druck des Zwischenvolumens in dem gewünschten Bereich von etwa 100 mbar befindet.

Zudem kann durch Überwachen des Drucks zwischen den beiden Lagen die Dichtheit der beiden Lagen überwacht werden. Falls eine der beiden Lagen defekt ist wird der Druck zwischen den beiden Lagen fallen.

Zudem kann durch eine Überwachung des Drucks zwischen den beiden Lagen beim Schließen der Prüfkammer eine Überprüfung erfolgen, ob sich ein Prüfling in der Prüfkammer befindet. Wenn die Kammer mit der doppellagigen Wand geschlossen wird, ändert sich der Druck zwischen den beiden Lagen, weil die konvexe Wölbung gegen den Prüfling oder die gegenüberliegende Wand gepresst wird. Wenn sich ein Prüfling in der Prüfkammer befindet, ist diese Druckänderung größer als ohne Prüfling. Dadurch können mögliche Fehlbeladungen frühzeitig erkannt werden.

Im Folgenden wird anhand der Figuren ein Ausführungsbeispiel der Erfindung näher erläutert. Es zeigen:
- Figur 1: eine schematische Schnittdarstellung des Ausführungsbeispiels in geöffnetem Zustand während des Schließens der Kammer,
- Figur 2: die Schnittdarstellung nach Figur 1 im geschlossenen Zustand der Kammer und

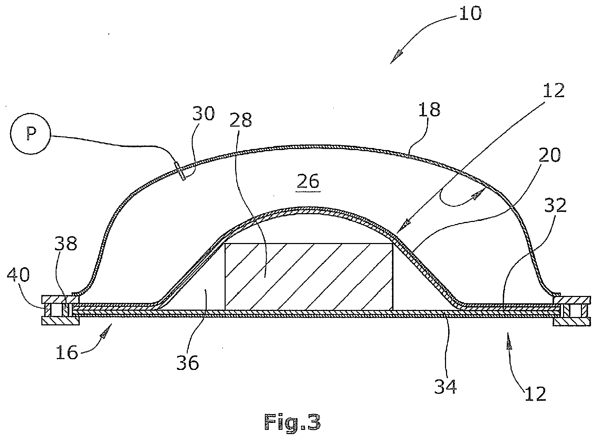

- Figur 3: einen Schnitt durch das Ausführungsbeispiel im geschlossenen Zustand der Kammer vor deren Evakuierung.

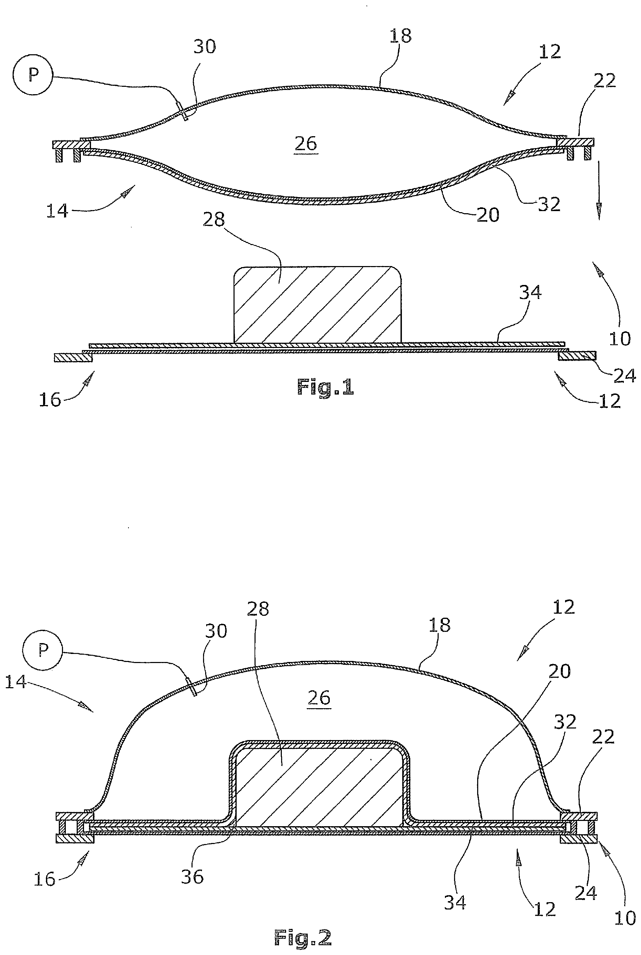

Die Prüfkammer 10 weist eine Wand 12 auf, die aus zwei Teilwänden 14, 16 besteht. Die Teilwand 16 bildet dabei den Boden der Prüfkammer 10 und die Teilwand 14 bildet den Deckel der Prüfkammer 10. Die Teilwand 16 ist starr, zum Beispiel aus Metall. Die Teilwand 14 besteht aus zwei Lagen 18, 20 einer Folie. Die Lage 20 ist flexibel und die Lage 18 ist starr. In der Draufsicht sind die Teilwände 14, 16 kreisrund ausgebildet und in ihren jeweiligen Randbereichen von einem starren Rahmen 22, 24 in Form eines Rings gehalten. Andere Formen der Teilwände 14,16 sind ebenfalls denkbar, bei denen die Teilwände 14,16 in der Draufsicht zumindest eine gerade Seite aufweisen. Der obere Ring 22 hält die beiden Folienlagen 18, 20 in deren äußerem Randbereich dichtend zusammen. Dadurch ist zwischen den beiden Lagen 18, 20 ein gasdichtabgeschlossenes Zwischenvolumen 26 gebildet. In dem Zwischenvolumen 26 herrscht ein Druck von ca. 80 - 90 mbar, der dem Luftwiderstand beim Schließen der oberen Teilwand 14 in Richtung des Pfeiles in
Figur 1 entgegenwirkt. Aufgrund des Überdrucks sind die beiden Folienlagen 18, 20 konvex nach außen gewölbt. Die untere Folienlage 20 ist im nicht geschlossenen Zustand der Prüfkammer 10 konvex in Richtung des Prüflings 28 gewölbt. Der Ring-Rahmen 22 ist mit einer in den Figuren nicht dargestellten Dichtung versehen, um das Zwischenvolumen 26 gasdicht abzuschließen.

Ein Drucksensor 30 ist in dem Zwischenvolumen 26 zwischen den beiden Lagen 18, 20 angeordnet und mit einem Druckmessgerät P verbunden, um den Druck des Zwischenvolumens 26 zu messen. Durch Überwachen des Drucks in dem Zwischenvolumen 26 kann eine Undichtigkeit der Folienlagen 18, 20 oder des Rahmens 22, das heißt also der oberen Teilwand 14, erkannt werden. Der Druck kann zudem als Hinweis darauf verwendet werden, ob sich ein Prüfling 28 in der Prüfkammer 10 befindet und welches Volumen dieser Prüfling hat. Je größer das Volumen des Prüflings 28 ist, desto größer ist der von dem Druckmessgerät P gemessene Druck des Zwischenvolumens 26 im geschlossenen Zustand der Prüfkammer gemäß Figur 2.

Mit Hilfe des Druckmessgeräts P kann beim Befüllen des Zwischenvolumens 26 der Druck genau auf den gewünschten Wert eingestellt werden. Vorzugsweise ist dabei die obere Teilwand 14 mit einem in den Figuren nicht dargestellten Ventilanschluss zum Anschließen einer Pumpe oder Druckgasquelle versehen, mit der das Zwischenvolumen 26 befüllt werden kann. Alternativ ist auch denkbar, dass das Zwischenvolumen 26 mit einer Flüssigkeit, einem Schaum oder einem Gel gefüllt ist. Ein ebenfalls in den Figuren nicht dargestelltes Überdruckventil der oberen Teilwand 14 kann verhindern, dass ein zu großer Druck zwischen den beiden Lagen 18, 20 hergestellt wird.

Zwischen dem Prüfling 28 und jeder der beiden Teilwände 14, 16 ist jeweils ein gasleitendes Flächengebilde 32,34, wie zum Beispiel ein Flies oder ein Gewebe, eingebracht, das dazu führt, dass in dem in Figur 2 dargestellten geschlossenen Zustand der Prüfkammer 10 Gas aus dem Prüfkammervolumen 36 beim Evakuieren der Prüfkammer 10 entweichen kann. Das Flächengebilde wird im Folgenden auch als Membran bezeichnet.

Die beiden Ring-Rahmen 22, 24 sind durch eine erste, innere Ringdichtung 38 und eine zweite, äußere Ringdichtung 40 gasdicht miteinander verbunden. Im geschlossenen Zustand werden die beiden Ring-Rahmen 22, 24 von einer in den Figuren nicht dargestellten Spannvorrichtung gegeneinander gepresst.

Nachdem der Prüfling 28 auf die auf der unteren Teilwand 16 aufliegende gasleitende Membran 34 gelegt wurde, wird über den Prüfling die zweite gasleitende Membran 32, wie in Figur 1 dargestellt, gelegt. Anschließend wird die obere Teilwand 14 zum Schließen der Prüfkammer 10 in Richtung des Pfeiles nach unten in Richtung auf den Prüfling 28 und auf die untere Teilwand 16 herabgesenkt.

Beim Schließen der Prüfkammer kann der Deckel, das heißt die obere Teilwand 14, schneller als bisher bewegt werden, weil der Überdruck in dem Zwischenvolumen 26 dem Luftwiderstand beim Herabsenken des Deckels entgegenwirkt und ein Verformen der flexiblen Folienlagen verhindert. Durch die konvexe Wölbung der unteren Lage 20 in Richtung auf den Prüfling 28 wird das Prüfkammervolumen zwischen den beiden Teilwänden 14, 16 im geschlossenen Zustand der Prüfkammer 10 bereits vor deren Evakuierung reduziert. Das verbleibende, noch zu evakuierende Restvolumen ist dadurch geringer. Im Ergebnis kann mit der erfindungsgemäßen Prüfkammer ein schnelleres Schließen und Evakuieren und somit eine schnellere Inbetriebnahme der Prüfkammer erfolgen.

## Patentansprüche

1. Evakuierbare flexible Prüfkammer (10) zur Leckprüfung eines Prüflings, mit einer ein Prüfkammervolumen (36) umgebenden Wand (12), wobei zumindest ein Bereich der Wand aus zwei Lagen (18, 20) Wandmaterial gebildet ist, von denen zumindest die dem Prüfkammervolumen (36) zugewandte Lage (20) aus einem flexiblen Material gebildet ist, und dass zwischen den beiden Lagen (18, 20) gegenüber der die Prüfkammer (10) umgebenden Atmosphäre ein Überdruck herstellbar ist, und wobei die das Prüfkammervolumen (36) umgebende Wand (12) aus zwei aufeinander passenden Teilwänden (14, 16) gebildet ist, wobei die erste Teilwand (16) den Boden der Prüfkammer (10) und die zweite Teilwand (14) den Deckel der Prüfkammer (10) bildet, wobei die von dem Prüfkammervolumen (36) abgewandte Lage (18) starr ausgebildet ist, **dadurch gekennzeichnet, dass** die beiden Lagen (18, 20) Folienlagen sind und konvex nach außen gewölbt sind, und dass zwischen den beiden Lagen (18, 20) gegenüber der die Prüfkammer (10) umgebenden Atmosphäre ein Überdruck im Bereich von 80 - 120 mbar herrscht.

2. Evakuierbare flexible Prüfkammer (10) nach Anspruch 1, **dadurch gekennzeichnet, dass** zwischen den beiden Lagen (18, 20) ein Gas, eine Flüssigkeit, ein Schaum oder ein Gel enthalten ist.

3. Evakuierbare flexible Prüfkammer (10) nach einem der vorhergehenden Ansprüche, **dadurch gekennzeichnet, dass** ein Druckmessgerät (30) zur Messung des Drucks zwischen den beiden Lagen (18, 20) vorgesehen ist.

4. Evakuierbare flexible Prüfkammer (10) nach einem der vorhergehenden Ansprüche, **dadurch gekennzeichnet, dass** die Wand (12) auf ihrer der Prüfkammervolumen (36) zugewandten Seite eine Schicht aus einem gasleitenden Material aufweist.

5. Verfahren zur Leckprüfung eines in einer Prüfkammer (10) nach einem der vorhergehenden Ansprüche enthaltenen Prüflings, **dadurch gekennzeichnet, dass** vor dem Schließen der Kammer (10) ein Überdruck zwischen den Lagen (18, 20) hergestellt wird.

6. Verfahren nach Anspruch 5, **dadurch gekennzeichnet, dass** die Dichtheit der Wand (12) durch Überwachen des Drucks zwischen den Lagen (18, 20) geprüft wird.

7. Verfahren nach Anspruch 5 oder 6, **dadurch gekennzeichnet, dass** eine Überprüfung, ob sich ein Prüfling in der Prüfkammer (10) befindet, dadurch erfolgt, dass beim Schließen der Prüfkammer (10) der Druck zwischen den beiden Lagen (18, 20) überwacht wird.

## Claims

1. An evacuable flexible test chamber (10) for a leakage test of a test piece, said test chamber having a wall (12) surrounding a test chamber volume (36), wherein at least a portion of said wall is made up of two layers (18, 20) of wall material of which at least the layer (20) facing said test chamber volume (36) is made from a flexible material, and between said two layers (18, 20) an overpressure as compared to the atmosphere surrounding said test chamber (10) is adapted to be created, and wherein said wall (12) surrounding said test chamber volume (36) is composed of two partial walls (14, 16) fitting on top of each other, wherein said first partial wall (16) forms the bottom of said test chamber (10) and said second partial wall (14) forms the top of said test chamber (10),
wherein said layer (18) facing away from said test chamber volume (36) is of a rigid configuration,
**characterized in that** said two layers (18, 20) are film layers and are convexly bulged outwards, and that between said two layers (18, 20) an overpressure in the range of 80 - 120 mbar prevails as compared with the atmosphere surrounding said test chamber (10).

2. The evacuable flexible test chamber (10) according to claim 1, **characterized in that** between the two layers (18, 20) a gas, a liquid, a foam or a gel is contained.

3. The evacuable flexible test chamber (10) according to any one of the preceding claims, **characterized in that** a pressure measuring instrument (30) for measuring the pressure between the two layers (18, 20) is provided.

4. The evacuable flexible test chamber (10) according to any one of the preceding claims, **characterized in that** the wall (12) comprises a layer of a gas-conducting material on its side facing the test chamber volume (36).

5. A method for a leakage test of a test piece located in a test chamber (10) according to any one of the preceding claims, **characterized in that** an overpressure between the layers (18, 20) is created before said chamber (10) is closed.

6. The method according to claim 5, **characterized in that** the tightness of the wall (12) is checked by monitoring the pressure between the layers (18, 20).

7. The method according to claim 5 or 6, **characterized in that** a check as to whether a test piece is in the test chamber (10) is performed by monitoring the pressure between the two layers (18, 20) when said test chamber (10) is being closed.

## Revendications

1. Chambre d'essai flexible évacuable (10) destinée à contrôler la présence de fuites dans un échantillon, dotée d'une paroi (12) entourant un volume de chambre d'essai (36), dans laquelle au moins une zone de la paroi est formée de deux couches (18,20) de matériau de paroi, selon lesquelles au moins la couche (20) fait face au volume de chambre d'essai (36) et est formée d'un matériau flexible, de sorte qu'il est possible de créer entre les deux couches (18, 20) une surpression par rapport à l'atmosphère entourant la chambre d'essai (10), dans laquelle la paroi (12) entourant le volume de chambre d'essai (36) est formée de deux parois partielles (14, 16) s'adaptant l'une à l'autre, dans laquelle la première paroi partielle (16) forme le fond de la chambre d'essai (10) et la deuxième paroi partielle (14) forme le couvercle de la chambre d'essai (10), dans laquelle la couche (18) opposée au volume de la chambre d'essai (36) est réalisée de manière rigide, **caractérisée en ce que** les deux couches (18, 20) sont des couches de feuilles et voûtées de façon convexe vers l'extérieur, et qu'entre les deux couches (18, 20) règne une surpression par rapport à l'atmosphère entourant la chambre d'essai (10) située dans un intervalle de 80-120 mbar.

2. Chambre d'essai flexible évacuable (10) selon la revendication 1, **caractérisée en ce qu'**un gaz, un fluide, une mousse ou un gel est contenu entre les deux couches (18, 20).

3. Chambre d'essai flexible évacuable (10) selon l'une des revendications précédentes, **caractérisée en ce qu'**un manomètre (30) est prévu pour mesurer la pression entre les deux couches (18, 20).

4. Chambre d'essai flexible évacuable (10) selon l'une des revendications précédentes, **caractérisée en ce que** la paroi (12) comporte sur sa face orientée vers le volume de chambre d'essai (36) une épaisseur de matériau poreux au gaz.

5. Procédé de contrôle de la présence de fuites dans un échantillon contenu dans une chambre d'essai (10) selon l'une des revendications précédentes, **caractérisé en ce qu'**une surpression est établie entre les couches (18, 20) préalablement à la fermeture de la chambre (10).

6. Procédé selon la revendication 5, **caractérisé en ce que** l'étanchéité de la paroi (12) est contrôlée par surveillance de la pression entre les couches (18,20).

7. Procédé selon la revendication 5 ou 6, **caractérisé en ce qu'**une vérification de la présence d'un échantillon dans la chambre d'essai (10) est effectuée en ce sens que la pression entre les deux couches (18, 20) est surveillée lors de la fermeture de la chambre d'essai (10) .
